# EUROPEAN PATENT SPECIFICATION

(11) **EP 2 453 777 B1**
(45) Date of publication and mention of the grant of the patent: **17.04.2013**
(21) Application number: 10718708.0
(22) Date of filing: 19.04.2010
(51) Int. Cl.: A47J 31/18

(54) **TURKISH COFFEE MACHINE**
TÜRKISCHE KAFFEEMASCHINE
MACHINE À CAFÉ TURC

(30) Priority: 17.07.2009 TR 200905555
(43) Date of publication of application: 23.05.2012
(73) Proprietor: Haremlik Gida, Dekorasyon Ve Ekipmanlari Ticaret Sanayi Limited Sirketi, Istanbul (TR); Lovalvo, Sally Ann, Istanbul (TR)
(72) Inventor: LOVALVO, Sally Ann, No:105 Kat : 6 Daire 13 Sisli Istanbul (TR); KOC, Caroline N., No:105 Kat : 6 Daire 13 Sisli Istanbul (TR); YENTUR, Nil Banu, No:105 Kat : 6 Daire 13 Sisli Istanbul (TR)
(74) Representative: Dericioglu, Ekin
(86) International application number: PCT/IB2010/051704
(87) International publication number: WO 2011/007266

(56) References cited:
- WO-A2-2004/069013
- AU-A- 6 236 490

## Description

### Field of the Invention

The present invention relates to an automatic Turkish coffee machine for making traditional Turkish coffee with coffee capsules by the high pressure steam method.

### Background of the Invention

Turkish coffee is the name given to the method of coffee preparation and cooking invented by the Turks. It has an authentic identity with its flavor, foam, aroma, cooking and serving, and a traditional history. It is the only type of coffee served with its ground.¹ It is one of the most preferred and consumed types of coffee in the world.
¹ Turkish Wikipedia: http://tr.wikipedia.org/wiki/T%C3%BCrk Kahvesi

Coffee, by its very nature, starts to lose its flavor and aroma after being ground. In order to avoid this loss, the ground coffee is placed into airtight packages as rapidly as possible. However once these packages are opened, the coffee remaining in the package starts to lose its aroma. In order to overcome this problem, single use coffee capsules are used. However the available coffee capsules are not appropriate for making Turkish coffee.

Turkish coffee is made with very finely ground coffee. In traditional Turkish coffee cooking method, the coffee, adequate amount of water and desired amount of sugar are mixed in a Turkish coffeepot (*cezve*). While the coffeepot is heated slowly over a low flame the coffee is continued to be stirred. When the coffee is adequately heated it starts to foam. When the desired amount of foam is produced the coffee is poured into the cups and served. Making Turkish coffee this way is laborious and time consuming.

Machines are developed for making Turkish coffee more easily and rapidly. The most common type of these machines is the semi-automatic machine wherein the pot in which coffee, water and sugar are placed by the user is heated by an electrical resistance. As the said machine cooks by heating the pot, after the electricity supplied to the resistance is cut off, heat of the pot may cause the coffee to be heated for another while and to overflow. Furthermore, since the amounts of coffee, sugar and water are adjusted manually in this method, no standardization can be achieved.

In full automatic coffee machines, coffee, water and sugar are placed within the chambers in the machine and when necessary specified amounts thereof are taken, mixed and cooked. However in the said machines, the coffee goes stale when it waits too long in the chamber in the machine and can not provide the same flavor. Additionally, just like the semi automatic machines, full automatic machines also cook the coffee for another while after heating process is finished due to the temperature of the heater. This may cause the coffee to overflow. Moreover, coffee residues remain at the parts near the spout in both the full automatic and semiautomatic machines and these residues should be cleaned.

See document AU-A-62364/90.

The International patent document WO2006/008583 within the state of the art discloses a machine for making Turkish coffee. The said machine operates with a semiautomatic system. Coffee and sugar are placed within a pot, and this pot is placed into the machine. Then the pot is heated, hot water is sprayed into the pot and the coffee is stirred simultaneously. When the sensor measuring the coffee level within the pot detects a rise in the level, that is to say when the coffee foams, it stops the machine. The user distributes the coffee that is in the pot into the cups and serves it. Although this system allows making coffee in large amounts, since coffee and sugar amounts are adjusted manually, it is not possible to attain the same mixture in each cup.

The Turkish patent document TR2005/02060 discloses a full automatic coffee machine. This machine receives desired amounts of coffee, sugar and water into the pot therein and stirs them by the help of a stirrer. The coffee is heated by means of the electrical resistances heating this pot and when sufficient amount of foam is produced, the electricity supplied to the resistances is cut off and the cooked coffee is poured into the cups via a pump. The coffee, sugar and water amounts used in this system are standard, however the ground coffee loses its aroma in time due to the fact that it waits in the coffee chamber within the device. Additionally there may remain coffee grounds within the pot where the coffee is cooked and in the hose used during transferring the coffee from the pot to the cup.

### Summary of the Invention

The objective of the present invention is to realize a Turkish coffee machine which cooks the coffee with pressurized stream.

Another objective of the present invention is to realize a Turkish coffee machine which makes Turkish coffee by using the coffee and sugar provided in coffee capsules.

### Detailed Description of the Invention

The Turkish coffee machine realized to attain the objectives of this invention is illustrated in the accompanying drawings, wherein;

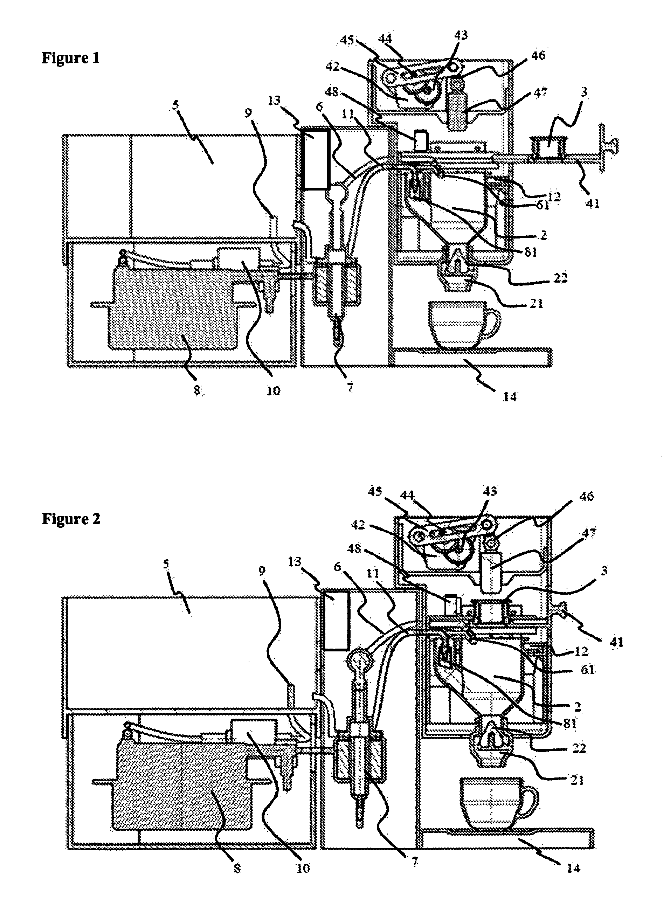

Figure 1 is the side sectional view of the Turkish coffee machine when the capsule is placed into the capsule holder.
Figure 2 is the side sectional view of the Turkish coffee machine when the capsule holder is closed.

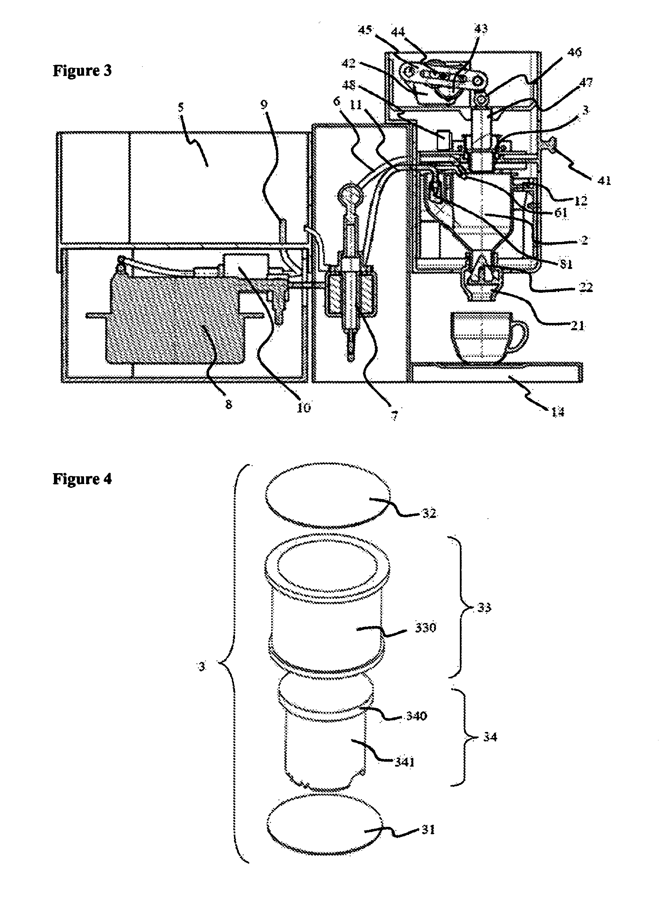

Figure 3 is the side sectional view of the Turkish coffee machine when the capsule is punched.
Figure 4 is the exploded perspective view of the capsule.
Figure 5 is the side sectional view of the closed state of the capsule.
Figure 6 is the side sectional view of the punched state of the capsule.
Figure 7 is the side sectional view of an alternative embodiment of the Turkish coffee machine where solenoid is used when the capsule is closed.

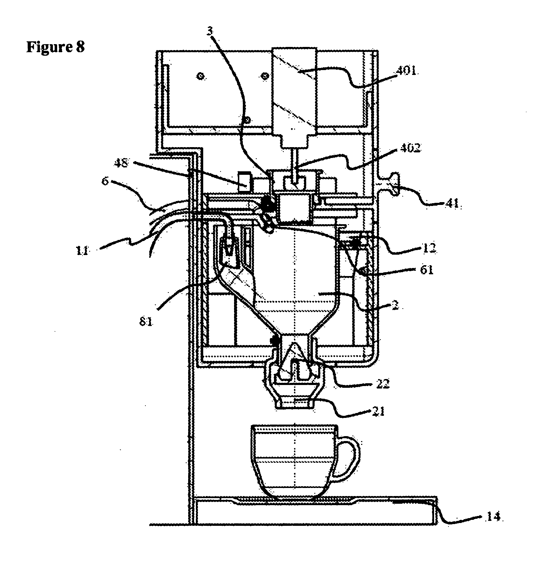

Figure 8 is the side sectional view of an alternative embodiment of the Turkish coffee machine where solenoid is used when the capsule is punched.
Figure 9 is the side sectional view of an alternative embodiment of the Turkish coffee machine where manual control lever is used when the capsule is closed.

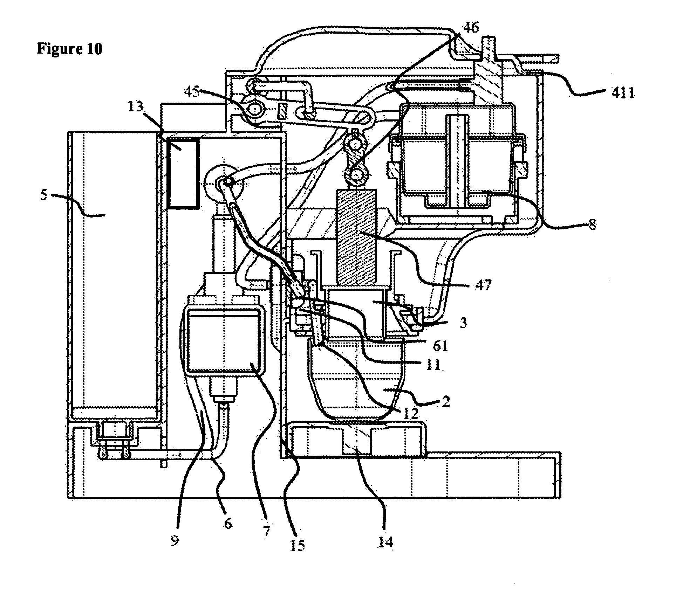

Figure 10 is the side sectional view of an alternative embodiment of the Turkish coffee machine where manual control lever is used when the capsule is punched.
Figure 11 is the side sectional view of an alternative embodiment of the Turkish coffee machine where the cooking chamber is located outside of the housing.
   1. Turkish coffee machine
   2. Cooking chamber
      21. Outlet part
      22. Lid
   3. Capsule
      31. Lower film
      32. Upper film
      33. Outer body
         330. Wall
         331. Extension
      34. Inner body
         340. Ceiling
         341. Protrusion
   4. Capsule punching mechanism
      41. Capsule holder
      42. Motor
      43. Gear pair
      44. Pin
      45. Level arm
      46. Connecting member
      47. Punch arm
      48. Switch
      401. Solenoid
      402. Punch pin
      411. Control lever
   5. Water tank
   6. Cold water hose
      61. Water nozzle
   7. Cold water pump
   8. Steam boiler
      81. Steam nozzle
   9. Steam boiler hose
   10. Steam boiler pump
   11. Steam hose
   12. Sensor
   13. Controller
   14. Coffee cup section
   15. Housing

The inventive Turkish coffee machine (1) comprises
- at least one cooking chamber (2) in the form of a pot in which the coffee is cooked and which comprises an outlet part (21) and a lid (22) at the lower end thereof,
- at least one capsule (3) which includes the coffee and sugar that will be brewed,
- a capsule punching mechanism (4) which punches the capsule (3) whereby enabling its content to be poured into the cooking chamber (2),
- at least one water tank (5) in which the water required to generate steam and to make the coffee is placed,
- at least one cold water hose (6) which conveys the water in the water tank (5) to the cooking chamber (2),
- at least one cold water pump (7) which pumps the water in the water tank to the cold water hose (6),
- at least one steam boiler (8) which boils the water whereby enabling to obtain high pressure steam,
- at least one steam boiler hose (9) which conveys the water in the water tank (5) to the steam boiler (8),
- at least one steam boiler pump (10) which pumps the water to the steam boiler (8) by increasing the pressure of the flow within the steam boiler hose (9),
- a steam hose (11) which conveys the steam obtained in the steam boiler (8) to the cooking chamber (2),
- a sensor (12) which measures the increase in the level of the coffee being cooked in the cooking chamber (2),
- a controller (13), which, when the level information coming from the sensor (12) reaches the intended value, cuts off the flow in the steam hose (11), opens the lid (22) on the lower surface of the cooking chamber (2) and pours the coffee into the cup,
- a coffee cup section (14) where the cup with which the cooked coffee will be served is placed and
- a housing (15) surrounding all of the parts.

The cooking chamber (2) serves as a pot in which the coffee is cooked. In the preferred embodiment of the invention, the cooking chamber (2) is in the form of a cylinder whose lower part tapers downwards. There is an opening on the upper surface of the cooking chamber (2). Coffee and sugar are introduced into the cooking chamber (2) from the said opening. The steam hose (11) and the cold water hose (6) are connected to the upper part of the cooking chamber (2). There is a lid (22) on the lower surface of the cooking chamber (2) which enables the cooked coffee to be transferred from the cooking chamber (2) to the cup. Below the lid (22) there is an outlet part (21) which enables the coffee to be poured into the cup smoothly.

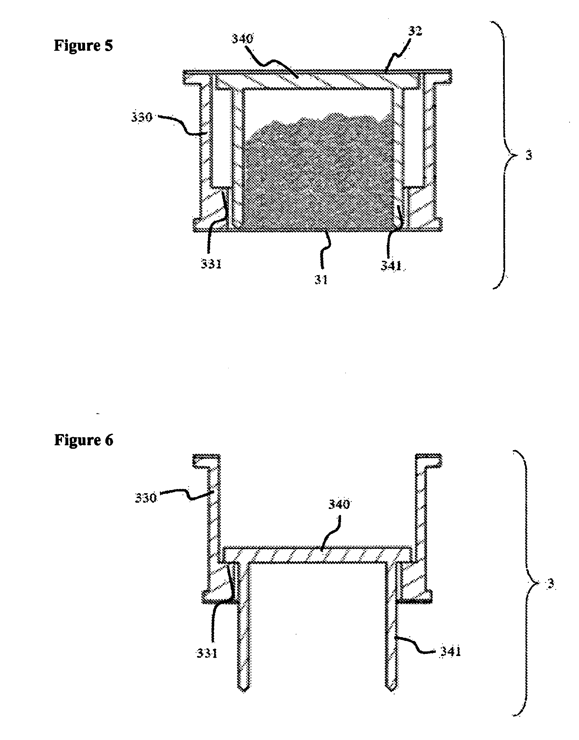

The capsule (3) is preferably cylindrical but can also be in different forms. It comprises an outer body (33) whose lower surface is coated with a lower film (31) and upper surface with an upper film (32), and an inner body (34) adapted to move within the outer body (33). The outer body (33) has a wall (330) surrounding the capsule (3) and an extension (331) at the lower end of the inner surface of the wall (330). The inner body (34) is placed within the outer body (33) concentrically. There is a circular ceiling (340) on the upper surface of the inner body (34). The ceiling (340) is narrower than the inner diameter of the wall (330) so that it can move within the wall (330), and wider than the inner diameter of the extension (331) so that it does not fall down to the bottom of the capsule. There is a cylindrical protrusion (341) in the inner body (34) integral with the ceiling (340) and having a smaller diameter than the extension (331) (Figure 5). This way, the inner body (34) can move within the outer body (33) but it does not fall down into the cooking chamber (2) since it gets caught by the extension (331) (Figure 6).

The lower end of the protrusion (341) is sharp, tapering to punch the film (31). Additionally there are recesses at the lower end of the protrusion (341). When the protrusion (341) is pushed towards the lower film (31) the parts where there is no recess punch the lower film (31), but because the parts corresponding to the recesses are not torn, the lower film (31) does not fall down to the cooking chamber (2). The lower film (31) is fixed to the bottom of the wall (330) of the outer body (33) and contacts the lower end of the protrusion (341). The upper film (32) is fixed to the top of the wall (330) and contacts the upper surface of the ceiling (340). The lower film (32) and the upper film (32) are made of a thin and flexible material, preferably of aluminum foil. The roasted and ground coffee and sugar mixture is located within the protrusion (341) on the lower film (31). The lower film (31) and the upper film (32) are airtight whereby loss of aroma of the coffee in time is prevented. Within the capsule (3) there may be placed mixtures of plain coffee or coffee with aromatic flavors like chocolate, cinnamon, cardamom, gum mastic, mint, etc. with no sugar, little sugar, medium sugar or a lot of sugar.

The capsule punching mechanism (4) comprises
- at least one capsule holder (41) on which the capsule (3) is placed when being inserted into the Turkish coffee machine (1), and which has an aperture in the center thereof wider than the protrusion (341) of the inner body (34) and narrower than the wall (330) of the outer body (33) and which can be opened and closed by means of a rail mechanism,
- at least one motor (42) which provides the power required to punch the capsule (3),
- a gear pair (43) comprising at least one gear that reduces the speed of the movement obtained by the motor (42),
- a pin (44) which is located on one of the gears in the gear pair (43) and which is not concentric with the said gear,
- a level arm (45) in the form of a rod, which is fixed at one end thereof, comprises an opening in the middle thereof in which the pin (44) may move back and forth, and moves circularly around the axis of its fixed end with the movement of the pin (44),
- at least one connecting member (46) which diverts the movement of the level arm (45) to vertical direction,
- a punch arm (47) connected to the connecting member (46) which can move only in the vertical axis and punches the capsule (3) whereby enabling the coffee in the capsule (3) to be poured into the cooking chamber (2) through the aperture in the capsule holder (41), and
- at least one switch (48) which is turned off when the capsule holder (41) is open, and which is turned on when the capsule holder (41) is closed whereby operating the motor (42). The capsule punching mechanism is located above the cooking chamber (2). When the capsule holder (41) is closed it closes the opening on top of the cooking chamber (2).

The water tank (5) is the container where the water to be used is stored. When the amount of water in the water tank (5) decreases, water can be added to it through the lid on top it. One end of both the cold water hose (6) and the steam boiler hose (9) are located within the water tank (5) somewhere near the base.

The cold water pump (7) conveys the water it takes from the water tank into the cooking chamber (2) by high pressure via the cold water hose (6). The cold water hose (6) is preferably flexible. There is provided a water nozzle (61) at the end of the cold water hose (6) facing the cooking chamber (2) for spraying the water.

In the preferred embodiment of the invention, the steam boiler (8) is located under the water tank (5). However since water is conveyed to the steam boiler (8) via the steam boiler hose (9) the steam boiler (8) can be disposed in different locations. The steam boiler (8) boils the water therein by using electric energy and enables obtaining high pressure steam. Because of the high pressure in the steam boiler (8), in order to be able to add water to the steam boiler (8), the water should be conveyed by a pressure higher than the pressure in the boiler (8). The steam boiler pump (10) enables to obtain the said water pressure. The steam boiler pump (10) is connected to the steam boiler hose (9) which conveys the water that it takes from the water tank (5) to the steam boiler. One end of the steam hose (11) is connected to the cooking chamber (2) while the other is to the steam boiler (8). The pressure steam obtained in the steam boiler (8) is conveyed to the cooking chamber (2) via the steam hose (11).

There is provided a steam nozzle (81) at the end of the steam hose (11) entering into the cooking chamber (2) intended for preventing the pressure steam coming from the steam boiler (8) during cooking from causing the water and coffee mixture to overflow. The said nozzle (81) imprisons the air bubbles of the pressure steam coming from the steam boiler (8) whereby enabling them to be discharged through the air holes thereon, prevents the coffee from splashing during cooking, and prevents it from overflowing from the cooking chamber (2).

The sensor (12) is arranged such that it detects the level of the coffee being cooked within the cooking chamber (2). This level information is transferred to the controller (13) to which the sensor (12) is connected. When the level in the information received from the sensor (12) reaches the predetermined sufficient foam level, the controller (13) cuts off the steam flow in the steam hose (11) and opens the lid (22) under the cooking chamber (2).

The coffee cup section (14) is located below the outlet part (21). A coffee cup is placed here and as the lid (22) opens, the cooked coffee is poured down to the cup.

The housing (15) keeps the units within the Turkish coffee machine (1) together and surrounds all the units to protect them against the external factors.

The Turkish coffee machine (1) starts to operate after the capsule (3) is placed on the open capsule holder (41) and the capsule holder (41) is closed. Then the switch (48) is turned on to operate the motor (42). Upon operation of the motor (42), the gear pair (43) rotates. With the said rotation, the pin (44) on the last gear makes a circular movement. By means of the circular movement of the pin (44), the level arm (45) rotates around the axis of its fixed end. To the other end of the level arm (45) is connected one end of the connecting member (46). The other end of the connecting member (46) is connected to the punch arm (47) which can move only in vertical axis. Rotation of the level arm (45) enables the punch arm (47) to move in the vertical axis. During this movement thereof the punch arm (47) contacts the upper film (32) of the capsule (3) which is located right below it and pushes the ceiling (340) under the upper film (32) and thus the inner body (34) downwards. As the inner body (34) moves downwards, the protrusion (341) punches the lower film (31). The inner body (34) continues to move downwards until the ceiling (340) contacts the extension (331). As the lower film (341) is punched, the coffee in the capsule (3) is poured into the cooking chamber (2). Then, as the motor (42) movement continues, the punch arm (47) returns to its initial position. When the cold water pump (7) starts to operate, water is sprayed onto the coffee, which is poured into the cooking chamber (2), from the water nozzle (61) at the end of the cold water hose (6). In the meantime, steam is obtained by boiling the water in the steam boiler (8). When the steam pressure reaches the predetermined level, high pressure steam is applied on the wetted coffee through the steam nozzle (81) at the end of the steam hose (11). The coffee is cooked by means of the heat of this steam. When the coffee is cooked sufficiently it starts to foam and the level of the coffee increases. Once the sensor (12) detects this level increase, the controller (13) cuts off the steam flow and opens the lid (22) after a predetermined period of time. When the lid (22) is opened, the coffee flows through the outlet part (21) and is poured down to the coffee cup placed on the coffee cup section (14) by the user.

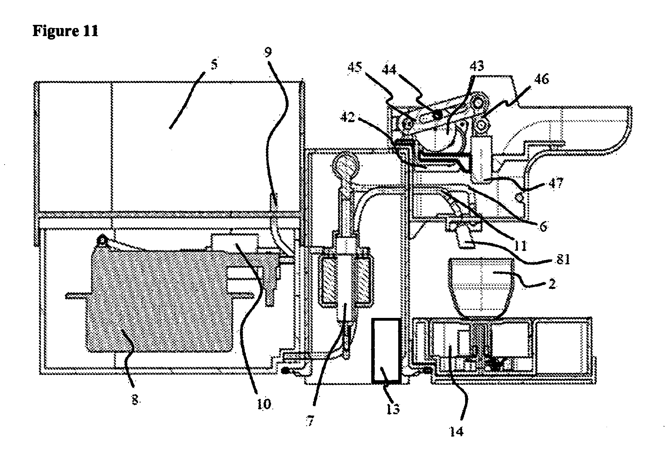

In an alternative embodiment of the invention, the cooking chamber (2) is positioned outside of the housing (15), at the location of the coffee cup section (14). In this embodiment, the coffee is again prepared within the cooking chamber (2) but there is no lid (22) or outlet part (21) at the base of the cooking chamber. In order to prevent the coffee from overflowing due to high pressure during this application, the cooking chamber (2) is raised via a mechanism and arranged such that it will contact the surface to which the steam and water are sprayed (Figure 11). After the coffee is prepared in the cooking chamber (2), the cooking chamber is lowered. As the coffee can be distributed by the user to the cups at desired amounts, a plurality of cups of coffee can be made concurrently in this alternative embodiment. In this embodiment, when a plurality of cups of coffee is desired to be made, the capsule (3) to be used should also include higher volumes of coffee.

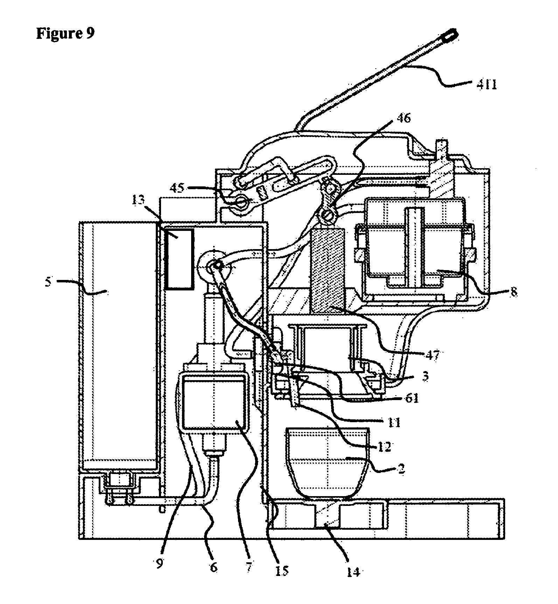

In another embodiment of the invention where the cooking chamber (2) is outside of the housing (15), the capsule punching mechanism (4) is controlled manually. In the said embodiment, there is a control lever (411) on the housing (15), and a spring in between the control lever (411) and the housing (15). As the control lever (411) is rotated downwards the spring is compressed and the punch arm (47) punches the capsule (3). Then, due to the pushing force of the spring, the control lever (411) moves upwards returning to its initial position (Figure 9).

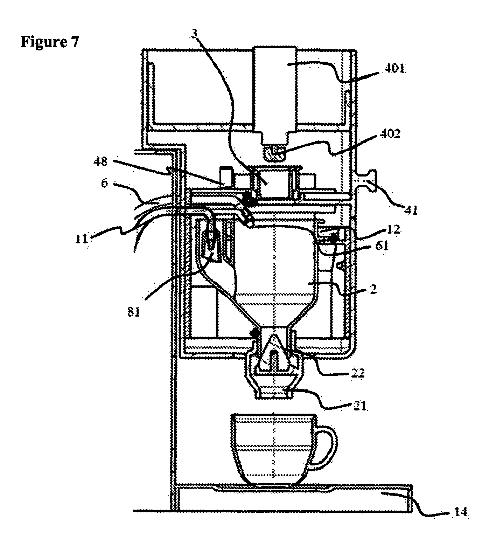

In another embodiment of the invention, an electromechanical solenoid (401) and a punch pin (402) are used instead of the capsule punching mechanism (4) (Figure 7). The motor (42) gear pair (43), pin (44), level arm (45), connecting member (46) and the punch arm (47) are not required. In the said embodiment, when the switch (48) is turned on, the solenoid (401) becomes active and pushes the punch pin (402) downwards, that is, towards the upper film (32) of the capsule. After a sufficient period of time for the coffee to be poured, the solenoid (401) pulls the punch pin (402) back upwards.

Within the scope of these basic concepts, it is possible to develop a wide variety of the inventive Turkish coffee machine (1). The invention cannot be limited to the examples described herein. It is essentially according to the claims.

## Claims

1. A Turkish coffee machine (1) **comprising**
- at least one cooking chamber (2) in the form of a pot in which the coffee is cooked,
- at least one capsule (3) which includes the coffee and sugar that will be brewed,
- a capsule punching mechanism (4) which punches the capsule (3) whereby enabling its content to be poured into the cooking chamber (2),
- at least one water tank (5) in which the water required to generate steam and to make the coffee is placed,
- at least one cold water hose (6) which conveys the water in the water tank (5) to the cooking chamber (2),
- at least one cold water pump (7) which pumps the water in the water tank to the cold water hose (6),
- at least one steam boiler (8) which boils the water whereby enabling to obtain high pressure steam,
- at least one steam boiler hose (9) which conveys the water in the water tank (5) to the steam boiler (8),
- at least one steam boiler pump (10) which pumps the water to the steam boiler (8) by increasing the pressure of the flow within the steam boiler hose (9),
- a steam hose (11) which conveys the steam obtained in the steam boiler (8) to the cooking chamber (2),
- a sensor (12) which detects the level of the coffee being cooked,
- a coffee cup section (14) where the cup with which the cooked coffee will be served is placed,
- a housing (15) which keeps all the units together and surrounds them to protect them against external factors;
**characterized by**
- at least one cooking chamber (2) which has a lid (22) at its lower surface and cooks the coffee therein with pressurized steam and water provided through its upper surface, and
- a controller (13), which, when the level information coming from the sensor (12) reaches the intended value, cuts off the steam flow in the steam hose (11), opens the lid (22) on the lower surface of the cooking chamber (2) and pours the coffee into the cup.

2. A Turkish coffee machine (1) according to Claim 1, **characterized by** a capsule (3) comprising
- a lower film (31) and an upper film (32) made of a thin and flexible material coating the lower and upper surfaces,
- an outer body (33) having a preferably cylindrical wall (330) and an extension (331) at the lower end of the inner surface of the wall (330),
- an inner body (34) arranged in the outer body (33) concentrically and having a circular ceiling (340) on its upper surface and a cylindrical protrusion (341) integral with the said ceiling (340);
in which capsule (3) the coffee and sugar mixture is located between the protrusion (341), ceiling (340) and the lower film (31).

3. A Turkish coffee machine (1) according to Claim 2, **characterized by** a capsule (3) comprising a ceiling (340) which is narrower than the inner diameter of the wall (330) so that the inner body (34) can move within the outer body (33), and wider than the inner diameter of the extension (331) so that the inner body (34) does not fall down to the cooking chamber (2).

4. A Turkish coffee machine (1) according to Claim 2, **characterized by** a capsule (3) which enables the coffee to be poured down to the cooking chamber (2) when the protrusion (341) punches the lower film (31) after the ceiling (340) is pushed towards the lower film (31).

5. A Turkish coffee machine (1) according to Claim 2, **characterized by** a capsule (3) comprising a cylindrical protrusion (341), which has a smaller diameter than the extension (331), a sharp lower end for punching the lower film (31), and recesses at its lower end preventing the lower film (31) from getting completely torn.

6. A Turkish coffee machine (1) according to Claim 1, **characterized by** a capsule punching mechanism (4) comprising
- at least one capsule holder (41) on which the capsule (3) is placed when being inserted into the Turkish coffee machine (1), and which has an aperture in the center thereof wider than the protrusion (341) of the inner body (34) and narrower than the wall (330) of the outer body (33) and which can be opened and closed by means of a rail mechanism,
- at least one motor (42) which provides the power required to punch the capsule (3),
- a gear pair (43) comprising at least one gear that reduces the speed of the movement obtained by the motor (42),
- a pin (44) which is located on one of the gears in the gear pair (43) and which is not concentric with the said gear,
- a level arm (45) in the form of a rod, which is fixed at one end thereof, comprises an opening in the middle thereof in which the pin (44) may move back and forth, and moves circularly around the axis of its fixed end with the movement of the pin (44),
- at least one connecting member (46) which diverts the movement of the level arm (45) to vertical direction,
- a punch arm (47) connected to the connecting member (46) which can move only in the vertical axis and punches the capsule (3) whereby enabling the coffee in the capsule (3) to be poured into the cooking chamber (2) through the aperture in the capsule holder (41), and
- at least one switch (48) which is turned off when the capsule holder (41) is open, and which is turned on when the capsule holder (41) is closed whereby operating the motor (42).

7. A Turkish coffee machine (1) according to Claim 1, **characterized by** at least one solenoid (401), which is used in an alternative embodiment of the invention in place of the capsule punching mechanism (4), and which enables the capsule (3) to be punched by pushing the punch pin (402) against the upper film (32) of the capsule (3).

8. A Turkish coffee machine (1) according to Claim 1, **characterized by** a cooking chamber (2), which is positioned outside of the housing (15) and on the coffee cup section (14) in an alternative embodiment of the invention, cooks the coffee therein with pressurized steam and water provided through its upper surface, and enables to make a plurality of cups of coffee concurrently as the coffee that is cooked therein is distributed by the user to the cups.

9. A Turkish coffee machine (1) according to Claim 1, **characterized by** a control lever (411) which enables the capsule punching mechanism (4) that punches the capsule (3) to be operated by a user in an alternative embodiment of the invention.

## Patentansprüche

1. Eine Türkische Kaffeemaschine (1) **umfassend**,
- mindestens eine Koch-Kammer(2) in Form einer Kanne, worin der Kaffee gekocht wird,
- mindestens eine Patrone (3), die den zu kochenden Kaffee und Zucker beinhaltet,
- einen Stanzmechanismus (4), der die Patrone (3) durchlocht, wobei er ermöglicht, dass deren Inhalt in die Koch-Kammer eingegossen wird,
- mindestens einen Wassertank (5), worin das zur Dampferzeugung und zur Kaffeevorbereitung benötigte Wasser gelegt ist,
- mindestens einen Wassertank (5), worin das zur Dampferzeugung und zur Kaffeevorbereitung benötigte Wasser gelegt ist,
- mindestens einen Kaltwasser-Schlauch (6), der das im Wassertank (5) befindliche Wasser zur Koch-Kammer (2) zuführt,
- mindestens eine Kaltwasser-Pumpe (7), die das Wasser im Wassertank in den Kaltwasser-Schlauch (6) pumpt,
- mindestens einen Dampfkessel (8), der das Wasser kocht, wobei er die Gewinnung von Hochdruck-Dampf ermöglicht,
- mindestens einen Kaltwasser-Schlauch (9), der das im Wassertank (5) befindliche Wasser zur Koch-Kammer (8) zuführt,
- mindestens eine Dampfkesselpumpe (10), die das Wasser durch Druckerhöhung des Flusses im Dampfkesselschlauch (9) in den Dampfkessel (8) pumpt,
- einen Dampfschlauch (11), der den im Dampfkessel (8) erhaltenen Dampf zur Koch-Kammer (2) leitet,
- einen Sensor (12), der den Füllstand des kochenden Kaffees erfasst,
- einen Teil (14) für Kaffetasse, wo die Tasse, mit der der gekochte Kaffee serviert wird, angeordnet ist.
- ein Gehäuse (15), welches alle der Bauelemente zusammenhält und sie umfaßt, um sie gegen die äußeren Einflüsse zu schützen.
**gekennzeichnet durch**
- mindestens eine Koch-Kammer (2), die auf ihrer unteren Fläche einen Deckel (22) aufweist und den darin befindlichen Kaffee **durch** den **durch** ihre obere Fläche gelieferten Druckdampf und das Wasser kocht, und
- eine Steuereinheit (13), die den Dampffluss im Dampfschlauch (11) einstellt, den Deckel (22) auf der unteren Fläche der Koch-Kammer (2) öffnet und den Kaffee in die Tasse eingießt, wenn die von dem Sensor geleitete Information bezüglich der Füllstand den vorgesehenen Wert erreicht hat.

2. Eine Türkische Kaffeemaschine (1) nach Anspruch 1, **gekennzeichnet durch** eine Patrone (3) umfassend
- einen unteren Film (31) und einen oberen Film (32), die aus einem dünnen und elastischen Material gebildet sind und die unteren sowie die oberen Oberflächen ummantelt,
- einen äußeren Körper (33), der vorzugsweise eine zylindrische Wand (330) sowie eine Verlängerung (331) am unteren Ende der inneren Fläche der Wand (330) aufweist,
- einen inneren Körper (34), der innerhalb des äußeren Körpers (33) konzentrisch angeordnet ist und auf seiner oberen Fläche eine kreisförmige Decke (340) sowie einen zylindrischen Vorsprung (341) aufweist, der an der erwähnten Decke (340) integriert ist;
wobei in der Patrone (3) die Mischung von Kaffee und Zucker zwischen dem Vorsprung (341), Decke (340) und dem unteren Film (31) angeordnet ist.

3. Eine Türkische Kaffeemaschine (1) nach Anspruch 2, **gekennzeichnet durch** eine Patrone (3) umfassend eine Decke (340), welche enger als der Durchmesser der Wand (330) ist, so dass der innere Körper (34) innerhalb des äußeren Körpers (33) sich bewegen kann und die wiederum breiter als der innere Durchmesser der Verlängerung (331) ist, so dass der innere Körper (34) nicht in die Koch-Kammer (2) herunterfällt.

4. Eine Türkische Kaffeemaschine (1) nach Anspruch 2, **gekennzeichnet durch** eine Patrone (3), die ermöglicht, dass der Kaffee herunter in die Koch-Kammer (2) eingegossen wird, wenn der Vorsprung (341), nachdem die Decke (340) bis zur unteren Film (31) geschoben wurde, den unteren Film (31) durchbohrt.

5. Eine Türkische Kaffeemaschine (1) nach Anspruch 2, **gekennzeichnet durch** eine Patrone (3) umfassend einen zylindrischen Vorsprung (341), der einen kleineren Durchmesser als der Verlängerung, ein scharfes unteres Ende zur Durchbohrung des unteren Filmes (31)sowie Hohlräume an ihrem unteren Ende aufweist, welche verhindern, dass der untere Film (31) völlig gerissen wird.

6. Eine Türkische Kaffeemaschine (1) nach Anspruch 1, **gekennzeichnet durch** eine Patrone-Stanzmechanismus (4), der umfaßt,
- mindestens einen Patrone-Halter (41, an dem die Patrone (3), wenn in die Türkische Kaffeemaschine (1) gelegt, angeordnet ist und der eine Öffnung im Zentrum davon aufweist, welche breiter als der Vorsprung (341) des inneren Körpers (34) und enger als die Wand des äußeren Körpers (33) ist und mit Hilfe eines Schienenmechanismus geöffnet und geschlossen werden kann.
- mindestens einen Motor (42), der die nötige Kraft zur Durchbohrung der Patrone (3) liefert,
- ein Zahnradpaar (43) umfassend zumindest ein Zahnrad, das die Geschwindigkeit der **durch** den Motor (42) gewonnenen Bewegung reduziert,
- einen Bolzen (44), der an einem der Zahnräder des Zahnradpaares (43) angeordnet ist und mit dem erwähnten Zahnrad nicht konzentrisch ist,
- ein Gestänge (45) in Form eines Stabs, welches an einem Ende davon befestigt ist, umfaßt in der Mitte eine Öffnung, worin der Bolzen (44) sich hin und her bewegen kann und bewegt sich kreisförmig mit der Bewegung des Gestänges um sein festes Ende,
- mindestens ein Verbindungselement (46), das die Bewegung des Gestänges (45) ablenkt,
- ein Bohrgestänge (47), das mit dem Verbindungselement (46) verbunden ist und sich nur in der vertikalen Richtung bewegen kann und die Patrone (3) durchlocht, wobei es ermöglicht, dass der Kaffee in der Patrone (3), der **durch** die Öffnung im Patrone-Halter (41) in die Koch-Kammer (2) eingegossen werden soll, und
- mindestens einen Schalter (48), welcher ausgeschaltet ist, wenn der Patronen-Halter (41) geöffnet und welcher eingeschaltet ist, wenn der Patronen-Halter (41) geschlossen ist, wobei er den Motor betreibt,

7. Eine Türkische Kaffemaschine (1) nach Anspruch 1, **gekennzeichnet durch** mindestens ein Solenoid (401), welches in einer alternativen Ausführung der Erfindung statt des Patronen-Stanzmechanismus (4) eingesetzt ist und welches wiederum ermöglicht, dass die Patrone (3) **durch** Drücken der Bohrnadel (402) gegen den oberen Film (32) der Patrone (3) gelocht wird.

8. Eine Türkische Kaffeemaschine (1)nach Anspruch 1, **gekennzeichnet durch** eine Koch-Kammer (2), welche in einer alternativen Ausführungsform der Erfindung in der Außenseite von Gehäuse (15) und auf demjenigen Teil (14) für Kaffeetasse angeordnet ist, kocht den Kaffee darin **durch** den **durch** ihre obere Fläche gelieferten Druckdampf und Wasser und ermöglicht für mehrere Tassen Kaffee zu machen und gleichzeitig der darin gekochte Kaffee **durch** den Benutzer in die Tassen auszuteilen.

9. Eine Türkische Kaffeemaschine (1) nach Anspruch 1, **gekennzeichnet durch** einen Steuerhebel (411), der es ermöglicht, dass die Patrone-Stanzmechanismus (4), der die Patrone (3) durchlocht, in einer alternativen Ausführung der Erfindung von einem Benutzer bedient wird.

## Revendications

1. Un percolateur de café turc (1) comportant
- au moins une chambre de cuisson (2) en forme d'un pot à l'intérieur duquel est cuit le café,
- au moins une capsule (3) comprenant le café et le sucre qui seront cuit,
- un mécanisme poinçonneuse de capsule (4) perforant la capsule (3) par laquelle on verse son contenu dans la chambre de cuisson (2),
- au moins un réservoir d'eau dans lequel l'eau requise pour générer la vapeur et faire du café est placée,
- au moins un tuyau d'eau froide (6) communiquant l'eau dans le réservoir d'eau à la chambre de cuisson (2),
- au moins une pompe d'eau froide (7) pompant l'eau dans le réservoir d'eau au tuyau d'eau froide (6),
- au moins une chaudière de vapeur (8) bouillant l'eau en permettant l'obtention de vapeur à haute pression,
- au moins un tuyau de chaudière de vapeur (9) communiquant l'eau dans le réservoir d'eau à la chaudière de vapeur (8),
- au moins une pompe de chaudière de vapeur (10) pompant l'eau à la chaudière de vapeur (8) en augmentant la pression du flux à l'intérieur du tuyau de chaudière de vapeur (9),
- un tuyau de vapeur (11) communiquant la vapeur obtenue dans la chaudière (8) à la chambre de cuisson (2),
- un capteur (12) détectant le niveau du café étant en train d'être cuite,
- une place pour tasse à café (14) où on place la tasse avec laquelle on servira du café cuit,
- une caisse extérieure (15) rangeant et entourant toutes les unités ensemble pour les protégeant contre les facteurs extérieurs ;
**caractérisé par**
- au moins une chambre de cuisson (2) possédant un couvercle sur son surface inférieure et cuisant le café y contenu avec la vapeur et l'eau pressurisées fournies par sa surface supérieure, et
- un contrôleur (13) qui, quand le niveau d'information arrivant du capteur (12) atteint à la valeur prévue, coupe le flux de vapeur dans le tuyau de vapeur (11), ouvrant le couvercle (22) sur la surface inférieure de la chambre de cuisson (2), et versant du café dans la tasse.

2. Un percolateur de café turc (1) selon la revendication 1, **caractérisé par** une capsule (3) comportant
- un film inférieur (31) et un film supérieur (32) réalisés en matériau faible et flexible recouvrant les surfaces inférieures et supérieures,
- un corps extérieur (33) possédant de préférence un mur cylindrique (330) et une extension (331) à l'extrémité inférieure de la surface intérieure du mur (330),
- un corps intérieur (34) arrangé dans le corps extérieur (33) de façon concentrique et possédant un plafond circulaire (340) sur sa surface supérieure et une protrusion cylindrique (341) intégrée avec ledit plafond (340) ;
le mélange de café et sucre est placé entre la protrusion (341), le plafond (340), le film inférieur (31) dans la capsule (3).

3. Un percolateur de café turc (1) selon la revendication 2, **caractérisé par** une capsule (3) comportant un plafond (340) plus étroit que le diamètre intérieure du mur (330) afin que le corps intérieur (34) puisse se déplacer à l'intérieur du corps extérieur (33) et plus large que le diamètre de l'extension (331) pour que le corps intérieur (34) ne tombe pas dans la chambre de cuisson (2).

4. Un percolateur de café turc (1) selon la revendication 2, **caractérisé par** une capsule (3) permettant le versement du café dans la chambre de cuisson (2) quand la protrusion (341) perfore le film inférieur (31) après qu'on pousse le plafond (340) vers le film inférieure (31).

5. Un percolateur de café turc (1) selon la revendication 2, **caractérisé par** une capsule (3) comportant une protrusion cylindrique (341) ayant un diamètre inférieur de l'extension (331), une aigue extrémité inférieure pour perforer le film inférieur (31), et renfoncements sur son extrémité inférieure empêchant le déchirement complet du film inférieur.

6. Un percolateur de café turc (1) selon la revendication 1, **caractérisé par** un mécanisme poinçonneuse de capsule (4) comportant
- au moins une porte-capsule (41) sur laquelle on place la capsule (3) quand inséré dans la machine de café turc (1), et ayant une ouverture dans son centre plus large que la protrusion (341) du corps intérieur et plus étroit que le mur (330) du corps extérieur (33) et qui peut être ouverte et fermée au moyen d'un mécanisme de rail,
- au moins un moteur (42) fournissant l'énergie requise pour perforer la capsule (3),
- une paire d'engrenage (43) comportant au moins un engrenage réduisant la vitesse du mouvement obtenu par le moteur (42),
- une épingle (44) placée sur l'un des engrainages dans la paire d'engrenage (43) et n'étant pas concentrique avec ledit engrenage,
- un levier (45) en forme de tige, fixé à l'une de ses extrémités, comportant une ouverture dans son centre dans lequel l'épingle peut reculer et avancer, et remuant dans une manière circulaire autour de l'axe de son extrémité fixée avec le mouvement de l'épingle (44),
- au moins un membre de connexion (46) déviant le mouvement du levier (45) à la direction verticale,
- une tige perforatrice (47) liée au membre de connexion (46) qui peut remuer seulement dans l'axe vertical et perfore la capsule (3) en permettant le versement du café à l'intérieur de la capsule (3) dans la chambre de cuisson (2) par l'ouverture dans la porte-capsule (41), et
- au moins un interrupteur (48) éteint quand la porte-capsule (41) est ouverte, et allumé quand la porte-capsule (41) est fermée en fonctionnant le moteur (42).

7. Un percolateur de café turc (1) selon la revendication 1, **caractérisé par** au moins un solénoïde (401) utilisé dans l'application alternative de l'invention au lieu du mécanisme perforateur de capsule (4), et permettant la perforation de la capsule (3) en poussant l'épingle de perforation (402) contre le film supérieur de la capsule (3).

8. Un percolateur de café turc (1) selon la revendication 1, **caractérisé par** une chambre de cuisson (2) localisée à l'extérieur de la caisse extérieure (15) et sur la section de tasse à café (14) dans l'application alternative de l'invention, cuit le café par la vapeur et l'eau pressurisées fournies par sa surface supérieure, et permettant la préparation de multiple tasses du café simultanément tel que le café cuit est distribué par l'utilisateur aux tasses.

9. Un percolateur de café turc (1) selon la revendication 1, **caractérisé par** un levier de contrôle (411) permettant l'opération du mécanisme perforateur de capsule (4) perforant la capsule (3) par l'utilisateur dans une application alternative de l'invention.
